Europäisches Patentamt

European Patent Office

Office européen des brevets

(19)

(11) **EP 0 574 311 B1**

(12) **FASCICULE DE BREVET EUROPEEN**

(45) Date de publication et mention
de la délivrance du brevet:
**27.03.1996 Bulletin 1996/13**

(51) Int. Cl.$^6$: **B23K 7/00**, F23D 14/42

(21) Numéro de dépôt: **93401474.7**

(22) Date de dépôt: **09.06.1993**

(54) **Procédé de fabrication d'un pièce métallique par oxycoupage, dispositif d'oxycoupage et pièce métallique obtenue**

Verfahren zum Fertigen eines metallisches Werkstücks mittels Sauerstoffbrennschneidens, Sauerstoffbrennschneide-Anlage und hergestelltes metallisches Werkstück

Method of making a metallic, workpieces by oxygen cutting, oxygen cutting device and obtained metallic workpiece

(84) Etats contractants désignés:
**AT BE DE DK ES FR GB GR IT LU NL PT SE**

(30) Priorité: **12.06.1992 FR 9207121**

(43) Date de publication de la demande:
**15.12.1993 Bulletin 1993/50**

(73) Titulaire: **CREUSOT-LOIRE INDUSTRIE**
**F-92800 Puteaux (FR)**

(72) Inventeurs:
• **Vial, Dominique**
**F-69008 Lyon (FR)**
• **Defay, Gérard**
**F-41800 Rives de Gier (FR)**
• **Blanchet, Michel**
**F-42800 Saint Joseph (FR)**

(74) Mandataire: **Bouget, Lucien et al**
**Cabinet Lavoix**
**2, Place d'Estienne d'Orves**
**F-75441 Paris Cédex 09 (FR)**

(56) Documents cités:
EP-A- 0 255 430        DD-A- 71 271
DE-A- 1 927 523        DE-C- 358 925
FR-A- 1 487 162        JP-A- 4 071 796

## Description

La présente invention est relative à un procédé de fabrication d'une pièce métallique, et notamment d'une pièce en acier par découpe d'un produit métallique tel qu'une tôle ou un bloc, par oxycoupage.

Pour réaliser des pièces de grosse chaudronnerie ou des pièces de mécanique lourde telles que des plateaux de presse ou de gros aimants pour accélérateur de particules, on découpe par oxycoupage dans des tôles dont l'épaisseur va de 300 mm à 2 m, des ébauches de pièces dont les formes s'approchent des formes finales souhaitées. Cette découpe se fait en utilisant un chalumeau oxygaz produisant une flamme de chauffe obtenue par combustion d'un gaz combustible dans l'oxygène, et un jet d'oxygène gazeux ou liquide qui coupe le métal en le faisant brûler. Lorsque le jet d'oxygène est gazeux, ce jet est un jet "dur", c'est-à-dire obtenu par une alimentation à pression élevée.

Cette technique présente un inconvénient qui résulte de ce que la qualité de la coupe est mauvaise et devient de plus en plus mauvaise lorsque l'épaisseur coupée augmente. Parmi les défauts qui apparaissent il y a notamment :

- une fusion de l'arête du côté du chalumeau qui crée un arrondi dont le rayon est voisin de 20 mm, pour 800 mm d'épaisseur,
- des défauts de verticalité de la pièce reposant sur une de ses faces qui se traduisent par des écarts de 12 à 15 mm par rapport à la verticale, qui correspond à la direction perpendiculaire aux faces de la pièce, suivant laquelle est mesurée l'épaisseur,
- des stries formées sur la surface de la coupe dont la profondeur atteint 5 mm ; dans le bas de la coupe, les stries s'inclinent et leur profondeur peut atteindre 8 mm,
- des coups de feu correspondant à des zones dans lesquelles il s'est produit un excès de combustion locale et donc un creusement de la surface de la coupe,
- le profil selon lequel la coupe doit être réalisée est mal suivi ; la tolérance est généralement de 20 à 30 mm pour une épaisseur de 800 mm.

Ces défauts font qu'il est nécessaire de prévoir des surcroîts de métal de 40 à 50 mm d'épaisseur sur tout le profil et d'enlever ces surépaisseurs par usinage à la machine outil, ce qui est très coûteux compte tenu de la dimension des pièces.

La coupe n'est pas bonne et en particulier il se forme des stries inclinées parce que le jet d'oxygène manque d'énergie A partir d'une certaine profondeur de coupe.

Il a été proposé dans la demande allemande DE-A-1.927.523 d'entourer le jet d'oxygène de coupe par un manchon de gaz supplémentaire ; dans la demande allemande DD-A-71271 et dans la demande européenne EP-A-0.255.430, on propose d'entourer le jet d'oxygène de coupe par un manchon d'un mélange d'oxygène et de gaz combustible, et dans tous les cas d'entourer l'ensemble par une couronne de chauffe. Dans le DD-A-71271, qui décrit les caractéristiques du préambule des revendications indépendantes 1 et 8, on propose de plus de réguler séparément le débit de l'oxygène de coupe d'une part et le débit du gaz du manchon, d'autre part. Mais ces techniques bien que permettant d'augmenter la productivité de la coupe, ne règlent pas le problème de la qualité de coupe.

La présente invention a pour but de proposer un procédé de fabrication d'une pièce métallique notamment en acier très épaisse par oxycoupage d'un produit métallique avec une qualité de coupe telle qu'il ne soit plus nécessaire de faire des usinages importants et qu'on puisse, par exemple, se contenter d'usiner les parties fonctionnelles des pièces destinées à coopérer avec les parties fonctionnelles d'autres pièces.

A cet effet, l'invention a pour objet un procédé de fabrication d'une pièce métallique et notamment d'une pièce en acier, par découpe d'un produit métallique tel qu'une tôle ou un bloc, par oxycoupage, dans lequel, à l'aide d'une buse formant une couronne de chauffe, on préchauffe le produit métallique suivant une zone de découpe correspondant au bord de la pièce, on envoie un jet d'oxygène de coupe sur la zone de découpe préchauffée et on forme autour du jet d'oxygène de coupe, un manchon périphérique d'un gaz supplémentaire à faible pression, de manière à envoyer dans la zone de découpe, un jet double coaxial constitué par le jet d'oxygène entouré par le manchon de gaz supplémentaire de telle sorte que le débit de l'oxygène de coupe d'une part et le débit du gaz supplémentaire d'autre part sont régulés séparément, caractérisé en ce que le manchon périphérique est formé à partir d'un gaz ayant une surpression par rapport à la pression atmosphérique inférieure à 1 bar.

De préférence, le jet d'oxygène de coupe est un jet mou à grand débit et la pression d'alimentation en oxygène de coupe est inférieure à 5 bars.

Il est préférable que le nez de la buse soit refroidi et que le diamètre équivalent du manchon de gaz supplémentaire soit inférieur ou égal à deux fois le diamètre du jet de coupe et que la section équivalente du manchon de gaz supplémentaire soit de 0,75 à 2 fois la section du jet d'oxygène.

De même il est préférable que le diamètre équivalent de la couronne de chauffe soit compris entre 3 et 4 fois le diamètre du jet d'oxygène de coupe et que la section équivalente de la couronne de chauffe soit comprise entre 1 et 2 fois la section du jet d'oxygène de coupe.

L'invention a également pour objet un dispositif d'oxycoupage pour mettre en oeuvre le procédé selon l'invention comprenant une buse ayant un canal central d'amenée d'une veine d'oxygène, des moyens à disposition annulaire d'amenée de gaz supplémentaire entourant le canal central et des moyens d'amenée d'un mélange d'oxygène et de gaz combustible entourant les moyens à disposition annulaire d'amenée de gaz supplémentaire.

Les moyens d'amenée de gaz supplémentaire sont disposés circulairement sur un cercle de diamètre inférieur ou égal à deux fois le diamètre du canal central et la section totale des moyens d'amenée de gaz supplémentaire est comprise entre 0,75 et 2 fois la section du canal central.

De préférence les moyens d'amenée d'un mélange d'oxygène et de gaz combustible sont disposés sur un cercle de diamètre compris entre 3 et 4 fois le diamètre du canal central et la section totale des moyens d'amenée d'un mélange d'oxygène et de gaz combustible est comprise entre 1 et 2 fois la section du canal de coupe.

Les moyens à disposition annulaire d'amenée de gaz supplémentaire peuvent être une pluralité de canaux entourant le canal central ; ils peuvent également comporter une rainure annulaire. Les moyens d'amenée d'un mélange d'oxygène et de gaz combustible peuvent être constitués d'une pluralité de canaux.

L'invention a également pour objet un dispositif d'oxycoupage pour mettre en oeuvre le procédé selon l'invention comportant une buse ayant un corps de forme générale cylindrique percé de canaux de passage de gaz et présentant une face de sortie de gaz et une extrémité d'entrée constituée par une surface de raccordement de forme conique coaxiale au corps cylindrique et des moyens d'alimentation en gaz comportant un distributeur ayant une surface de forme conique destinée à coopérer avec la surface de raccordement de la buse pour constituer des chambres d'alimentation en gaz des canaux de la buse, et des conduites d'alimentation des chambres, la buse comportant :

- un canal central disposé suivant l'axe du corps cylindrique débouchant à l'une de ses extrémités sur la face de sortie de la buse et, à son autre extrémité, sur la surface de raccordement au niveau d'une chambre centrale du distributeur,
- une première pluralité de canaux parallèles à l'axe de la buse disposés à la périphérie de la buse débouchant, sur la face de sortie de la buse, dans une zone annulaire ayant pour axe l'axe de la buse par une première extrémité de sortie et ayant une seconde extrémité débouchant sur la surface de raccordement dans une première chambre annulaire du distributeur délimitée sur la surface de raccordement par une première rainure annulaire coaxiale à la buse,
- une pluralité de canaux inclinés par rapport à l'axe de la buse en nombre égal aux canaux de la première pluralité de canaux, disposés vers l'extérieur de la buse par rapport aux canaux de la première pluralité de canaux débouchant chacun dans un canal de la première pluralité de canaux par une première extrémité et sur la surface de raccordement par une seconde extrémité, à l'intérieur d'une seconde chambre délimitée sur la surface de raccordement par une seconde rainure annulaire coaxiale à la buse, caractérisé en ce que la buse comporte en outre :
- une seconde pluralité de canaux parallèles à l'axe de la buse débouchant à l'une de leurs extrémiés sur la face de sortie de la buse, dans une zone annulaire ayant pour axe l'axe de la buse et située entre l'extrémité de sortie du canal central et la zone annulaire dans laquelle débouchent les extrémités de sortie des canaux de la première pluralité, et à leurs autres extrémités dans une chambre du distributeur délimitée sur la surface de raccordement de la buse, par une troisième rainure annulaire coaxiale à la buse.

L'extrémité du corps cylindrique de la buse peut comporter une rainure annulaire débouchant sur sa face de sortie ayant pour axe l'axe de la buse, dans laquelle débouchent les extrémités de sortie des canaux de la seconde pluralité de canaux.

De préférence, la paroi du canal central est polie de manière à présenter un aspect "glacé".

La buse peut comporter en outre, autour de son extrémité de sortie une chambre annulaire ayant une cloison radiale et des moyens d'alimentation en eau de refroidissement et d'évacuation d'eau de refroidissement communiquant chacun avec l'espace interne de la chambre annulaire, de part et d'autre de la cloison.

L'invention concerne enfin une pièce métallique et notamment une pièce en acier ayant deux faces opposées sensiblement parallèles et une épaisseur supérieure à 0,100 m et pouvant aller jusqu'à 2 mètres, caractérisée en ce que :

- elle est obtenue à ses cotes définitives par oxycoupage d'un produit métallique sans usinage par enlèvement de copeaux dans ses zones non fonctionnelles, et elle présente à l'état brut de découpage :
- un rayon R caractéristique de la fusion d'arête de la pièce inférieur à 8/1000 de l'épaisseur de la pièce,
- un défaut de verticalité V inférieur à 8/1000 de l'épaisseur de la pièce,
- des stries de coupe verticales uniformes et d'une profondeur inférieure à 1/1000 de l'épaisseur de la pièce,
- une rugosité moyenne inférieure à 20 $\mu$m + 20 $\mu$m x e, e étant l'épaisseur de la pièce exprimée en mètres,

et la direction verticale correspondant à la direction perpendiculaire aux faces opposées de la pièce suivant laquelle est mesurée l'épaisseur.

EP 0 574 311 B1

Le procédé selon l'invention permet de réaliser des pièces découpées directement aux cotes finales et ne nécessitant un usinage que des parties fonctionnelles.

L'invention va maintenant être décrite plus en détail en regard des figures annexées dans lesquelles :

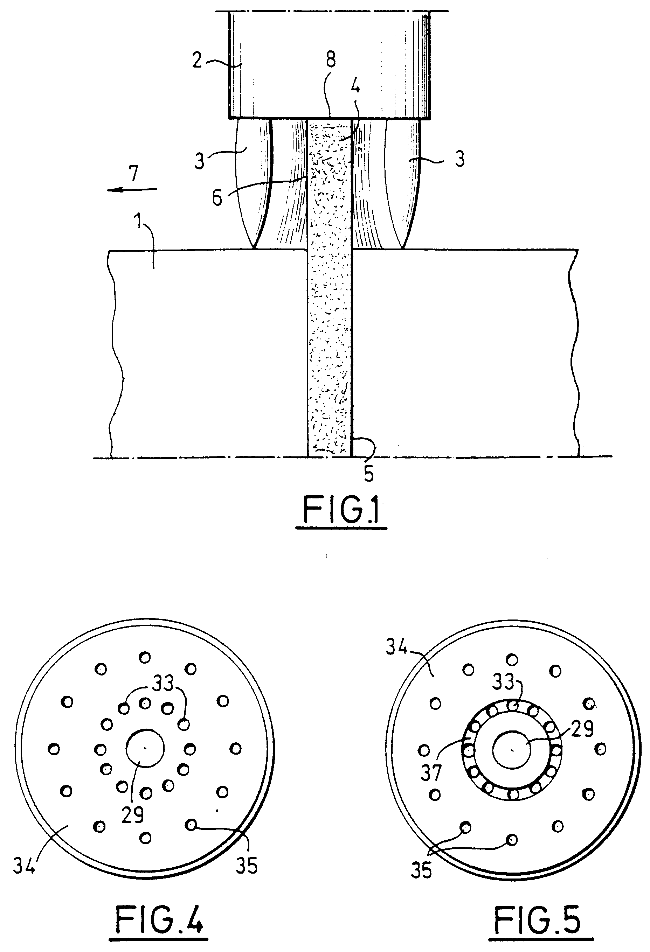

- La figure 1 est un schéma de principe montrant en coupe verticale une opération de découpe d'une pièce par oxycoupage en utilisant le procédé selon l'invention.
- La figure 2 est une vue partielle en coupe axiale d'un dispositif d'oxycoupage permettant la mise en oeuvre du procédé selon l'invention.
- La figure 3 est une vue en perspective d'une buse d'oxycoupage pour la mise en oeuvre de l'invention munie d'un dispositif de refroidissement de son extrémité.
- La figure 4 est une vue de face de l'extrémité d'une buse d'oxycoupage pour la mise en oeuvre de l'invention.
- La figure 5 est une vue de face de l'extrémité d'un deuxième mode de réalisation d'une buse d'oxycoupage pour la mise en oeuvre de l'invention.
- La figure 6 est une représentation schématique en perspective des défauts de coupe d'une pièce oxycoupée épaisse.
- La figure 7 est une vue en coupe verticale des défauts de coupe d'une pièce oxycoupée épaisse.

Pour réaliser la découpe d'une pièce épaisse dans un produit métallique 1 tel qu'une tôle ou un bloc avec une buse 2 d'un chalumeau on crée des flammes chaudes 3 résultant de la combustion dans l'oxygène d'un gaz combustible tel que du gaz de ville, du propane, du butane, de l'acétylène. Ces flammes sont disposées circulairement de façon à former une couronne de chauffe (seules deux flammes sont visibles sur la figure) et réchauffent localement la pièce. Par la partie centrale du chalumeau on envoie un jet 4 d'oxygène pur entouré d'un manchon 6 de gaz combustible additionnel pouvant être du gaz de ville, du méthane, du propane, de l'acétylène, etc... . On déplace l'ensemble dans le sens de la flèche 7. Le gaz supplémentaire est envoyé sous une faible pression, de moins de 1 bar par rapport à la pression atmosphérique ; le jet 4 d'oxygène est ce que l'homme de métier appelle un jet mou obtenu par exemple avec une pression d'alimentation en oxygène inférieure à 5 bars et un diamètre de trou 8 d'alimentation en oxygène de l'ordre de 10 mm.

Les alimentations en oxygène et gaz supplémentaire sont régulées en débit et pression séparément par des moyens connus de l'homme de métier.

A proximité de la sortie de la buse 2, le manchon de gaz supplémentaire 6 peut être considéré comme un cylindre creux de diamètre intérieur $d_1$, de diamètre extérieur $d_2$ et de section

$$\frac{\pi}{4} (d_2{}^2 - d_1{}^2),$$

on dit que S est la section équivalente du manchon 6 et que

$$\frac{d_1 + d_2}{2}$$

est le diamètre équivalent du manchon 6.

De même, les flammes chaudes 3 sont disposées en couronne et peuvent être considérées comme enveloppées par un cylindre creux de diamètre intérieur $D_1$ et de diamètre extérieur $D_2$ et de section

$$\frac{\pi}{4} (D_2{}^2 - D_1{}^2) ;$$

on dit que S est la section équivalente de la couronne de flammes et

$$\frac{D_1 + D_2}{2}$$

le diamètre équivalent de cette couronne.

On obtient des résultats d'autant meilleurs que la section équivalente S du manchon de gaz supplémentaire est comprise entre 0,75 et 2 fois la section du jet d'oxygène de coupe et le diamètre équivalent

$$\frac{d_1 + d_2}{2}$$

du manchon est inférieur ou égal à 2 fois le diamètre du jet d'oxygène de coupe.

Il est de plus préférable que la section équivalente S de la couronne de flamme soit comprise entre 1 et 2 fois la section du jet d'oxygène de coupe et le diamètre équivalent compris entre 3 et 4 fois le diamètre des jets d'oxygène de coupe.

4

Comme dans les procédés connus d'oxycoupage, les flammes 3 échauffent localement le métal qui brûle au contact du jet 4 d'oxygène, ce qui crée une saignée 5 dans la pièce et assure la coupe.

On a constaté, de façon inattendue, qu'en utilisant un jet double comportant un jet d'oxygène entouré par un manchon de gaz notamment de gaz combustible et un jet d'oxygène mou au lieu d'un jet dur on obtenait une qualité de coupe remarquable et qui caractérise les pièces ainsi obtenues.

Lorsque le gaz constituant le manchon de gaz n'est pas un gaz combustible, le gaz peut être de l'argon ou de l'azote. Mais on a constaté qu'en utilisant un gaz combustible on obtenait de meilleurs résultats qu'avec un gaz non combustible.

Enfin pour assurer la stabilité du procédé il est nécessaire de refroidir le nez de la buse 2.

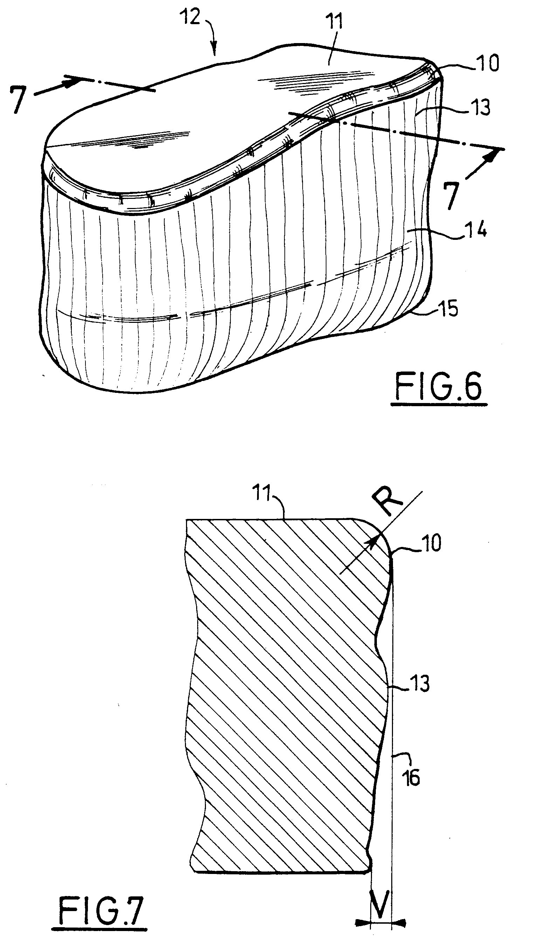

Les défauts de coupe qu'on rencontre sont (figures 6 et 7) :

- la fusion d'arête : l'arête 10 d'intersection de la face supérieure 11 de la pièce 12, située du côté du chalumeau de coupe, et du flanc 13 coupé, fond partiellement et, vue en coupe, présente un arrondi de rayon R ; plus R est petit meilleure est la coupe.
- les stries verticales 14 et les stries inclinées 15 : ce sont des irrégularités de la surface de coupe qui comporte des sillons caractérisés par leur profondeur ; dans l'art antérieur, on constate que lorsque l'épaisseur coupée devient importante on a des stries verticales sur les 2/3 de la hauteur depuis la face supérieure et des stries inclinées et plus profondes sur le 1/3 restant de la hauteur.
- la verticalité : par rapport à une surface perpendiculaire à la face supérieure 11, la surface de la coupe 13 s'éloigne sur toute la hauteur d'une distance V représentée à la figure 7 dans laquelle la trace de la surface perpendiculaire à la face supérieure 11 est la droite 16.
- la rugosité mesurée par la rugosité arithmétique moyenne Ra selon la norme française NFE 05-015/05-018.
- les coups de feu qui sont des zones localisées où il y a eu un excès de combustion de métal et qui se traduisent par une excavation dans la surface de la coupe.

Tous ces défauts, sauf le coup de feu, ont une intensité globalement proportionnelle à l'épaisseur coupée, c'est ainsi que pour une pièce d'un mètre d'épaisseur, les stries sont deux fois plus profondes que pour une pièce de 500 mm d'épaisseur.

A titre d'exemple, pour une pièce de 800 mm d'épaisseur coupée avec le procédé selon l'invention ou avec un procédé selon l'art antérieur on a les amplitudes de défauts suivantes :

|  | Selon l'invention | art antérieur |
|---|---|---|
| fusion d'arête R | < 4 mm | 20 mm |
| Stries verticales (profondeur) | < 1 mm | 5 mm |
| Stries inclinées | il n'y en a pas | 8 mm |
| Verticalité | < 5 mm | 15 mm |
| Rugosité Ra | 20 μm | hors du champ de mesure habituel (>150/200 μm) |
| Coups de feu | il n'y en a pas | au moins 1 par face. |

D'une façon plus générale, avec le procédé selon l'invention, si e représente l'épaisseur de la pièce exprimée en mètres, on a :

$$\text{fusion d'arête} \qquad R \leq 8 \times \frac{e}{1000}$$

$$\text{stries verticales prof} \leq 1 \times \frac{e}{1000}$$

$$\text{verticalité} \leq 8 \times \frac{e}{1000}$$

$$\text{rugosité} \qquad Ra \leq 20 \ \mu m + 20 \ \mu m . \frac{e}{1 \ m.}$$

(par exemple pour e = 1 m, R = 6 mm et Ra = 20 μm).

Ces amplitudes de défauts sont suffisamment faibles pour que les parties non fonctionnelles des pièces, c'est-à-dire celles ne coopérant pas avec d'autres pièces, puissent rester brutes de coupe par oxycoupage.

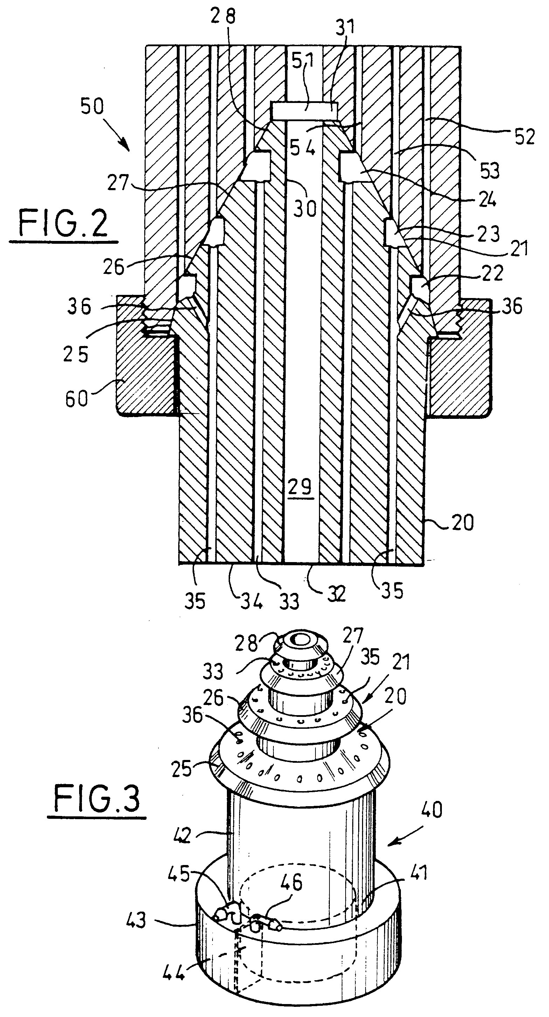

Pour mettre en oeuvre ce procédé, on utilise un chalumeau équipé d'une buse (figure 2) qui comporte un corps cylindrique 20 prolongé par une partie conique de raccordement 21 munie de trois rainures circulaires 22, 23, 24 qui séparent quatre surfaces annulaires tronconiques 25, 26, 27, 28. La buse est percée dans son axe d'un canal axial 29 dont la paroi 30 est glacée. Ce canal axial 29 est alimenté en oxygène de coupe par son extrémité 31 située du côté de la partie conique 21 et l'oxygène de coupe forme un jet à la sortie 32 du canal axial 29 sur la face de sortie 34 de la buse.

Un corps de distributeur 50 comportant une surface conique de raccordement venant s'appliquer sur la partie conique de raccordement 21 de la buse et fixé sur la buse par un écrou 60 présente des rainures annulaires dans des positions correspondant aux positions des rainures 22, 23, 24 de la buse et des surfaces annulaires tronconiques de raccordement dans des positions correspondant aux surfaces 25, 26, 27 et 28 de la buse. Le distributeur 50 délimite ainsi avec la partie 21 de la buse des chambres de distribution au niveau de chacune des rainures 22, 23 et 24. Une chambre 51 permettant l'alimentation du canal central 29 en oxygène de coupe est également prévue à la partie centrale du dispositif. Les chambres du distributeur sont alimentées en gaz par des conduits tels que 52, 53 et 54 eux-mêmes reliés à des canalisations d'alimentation du chalumeau d'oxycoupage.

Une première pluralité de canaux 35 longitudinaux parallèles au canal axial 29 sont disposés circulairement à la périphérie du corps 20 de la buse et débouchent d'une part sur la face de sortie 34 de la buse dans une zone annulaire ayant pour axe l'axe de la buse et d'autre part dans une première chambre de distribution située au niveau de la rainure 23.

Une pluralité de canaux 36 inclinés par rapport à l'axe de la buse en nombre égal aux canaux 35 mettent en communication chaque canal 35 avec la seconde chambre de distribution située au niveau de la rainure 22.

Par la rainure 23, les canaux 35 sont alimentés en oxygène. Par la rainure 22 et les canaux 36, les canaux 35 sont alimentés en gaz combustible. L'oxygène et le gaz combustible se mélangent dans le canal 35 et à la sortie de celui-ci forment une flamme.

Selon l'invention, une seconde pluralité de canaux 33 longitudinaux parallèles au canal central 29 sont disposés autour du canal 29 et débouchent d'une part sur la face de sortie 34 de la buse, dans une zone annulaire dont l'axe est confondu avec l'axe de la buse et située autour de l'extrémité de sortie du canal central 29 et à l'intérieur de la zone annulaire dans laquelle débouchent les canaux 35 (voir figure 4) et d'autre part dans une troisième chambre de distribution, au niveau de la rainure 24.

Les canaux 33 sont alimentés en gaz combustible sous faible pression par l'intermédiaire des conduits 54 du distributeur, de manière à former un manchon de gaz combustible entourant le jet d'oxygène à la sortie de la buse.

Comme représenté à la figure 5, la seconde pluralité de canaux 33 peut déboucher dans une rainure circulaire 37 réalisée dans l'extrémité 34 de la buse et entourant le débouché du canal axial 29.

Pour satisfaire les conditions de géométrie imposées au manchon de gaz supplémentaire et à la couronne de flammes, les canaux 33 sont disposés suivant un cercle passant par leurs axes, dont le diamètre est inférieur ou égal à deux fois le diamètre du canal 29 et la somme des sections des canaux 33 est comprise entre 0,75 et 2 fois la section du canal 29.

De même, les canaux 35 sont disposés suivant un cercle passant par leurs axes, de diamètre compris entre 3 et 4 fois le diamètre du canal 29 et la somme des sections des canaux 35 est comprise entre 1 et 2 fois la section du canal 29.

Pour obtenir une bonne qualité de coupe pendant un temps long il est nécessaire de refroidir l'extrémité de la partie cylindrique de la buse. Pour celà, on peut placer autour de cette extrémité une chambre annulaire parcourue par de l'eau de refroidissement.

Dans un mode particulier de réalisation la buse 40 porte à l'extrémité de sortie 41 de sa partie cylindrique 42 une chambre annulaire 43 comportant une paroi radiale 44. La chambre 43 est reliée de part et d'autre de la paroi radiale 44 à une alimentation 45 en eau et à un moyen d'évacuation 46 d'eau. Cette chambre est venue de matière avec la buse et fermée par un couvercle non visible sur le dessin. Cette chambre peut être aussi séparée de la buse et donc démontable.

On remarquera que le procédé peut être utilisé pour découper des pièces d'épaisseur inférieure à 300 mm, par exemple d'épaisseur comprise entre 100 mm et 300 mm et notamment des pièces couvertes d'une couche de calamine épaisse sans qu'il soit nécessaire d'enlever au préalable cette calamine.

On remarquera également que le corps cylindrique 20 de la buse peut être de section quelconque et non pas simplement circulaire. La section peut en effet comporter des lobes ou être sensiblement carrée. D'une façon générale le corps cylindrique est un corps engendré par une droite se déplaçant parallèlement à elle-même et s'appuyant sur une courbe fermée.

**Revendications**

1. Procédé de fabrication d'une pièce métallique (12), et notamment d'une pièce en acier, par découpe d'un produit métallique (1) tel qu'une tôle ou un bloc, par oxycoupage, dans lequel, à l'aide d'une buse formant une couronne de chauffe, on préchauffe le produit métallique (1) suivant une zone de découpe correspondant au bord de la pièce, on envoie un jet d'oxygène de coupe (4) sur la zone de découpe préchauffée et on forme autour du jet d'oxygène de coupe (4), un manchon périphérique (6) d'un gaz supplémentaire à faible pression, de manière à envoyer dans la zone de découpe, un jet double coaxial constitué par le jet d'oxygène (4) entouré par le manchon de gaz supplé-

EP 0 574 311 B1

mentaire de telle sorte que le débit de l'oxygène de coupe d'une part, et le débit du gaz supplémentaire d'autre part, sont régulés séparément, caractérisé en ce que le manchon périphérique (6) est formé à partir d'un gaz ayant une surpression par rapport à la pression atmosphérique inférieure à 1 bar.

2.  Procédé selon la revendication 1, caractérisé en ce que le jet d'oxygène de coupe (4) est un jet mou à grand débit.

3.  Procédé selon la revendication 2, caractérisé en ce que le jet d'oxygène de coupe (4) est formé à partir d'oxygène gazeux à une pression inférieure à 5 bars.

4.  Procédé selon l'une quelconque des revendications 1 à 3, caractérisé en ce que le nez de la buse est refroidi.

5.  Procédé selon l'une quelconque des revendications 1 à 4, caractérisé en ce que le diamètre équivalent du manchon de gaz supplémentaire est inférieur ou égal à deux fois le diamètre du jet de coupe et en ce que la section équivalente du manchon de gaz supplémentaire est de 0,75 à 2 fois la section du jet d'oxygène de coupe.

6.  Procédé selon la revendication 5, caractérisé en ce que le diamètre équivalent de la couronne de chauffe est compris entre 3 et 4 fois le diamètre du jet d'oxygène de coupe et en ce que la section équivalente de la couronne de chauffe est comprise entre 1 et 2 fois la section du jet d'oxygène de coupe.

7.  Procédé selon l'une quelconque des revendications 1 à 6, caractérisé en ce que la pièce est obtenue à ses cotes définitives pour ses parties non fonctionnelles par oxycoupage sans usinage ultérieur.

8.  Dispositif d'oxycoupage pour mettre en oeuvre le procédé suivant l'une quelconque des revendications précédentes du type comprenant une buse ayant un canal central (29) d'amenée d'une veine d'oxygène, des moyens disposés (33) de manière annulaire d'amenée de gaz supplémentaire entourant le canal central (29) et des moyens (35, 36) d'amenée d'un mélange d'oxygène et de gaz combustible entourant les moyens (33) à disposition annulaire d'amenée de gaz supplémentaire, caractérisé en ce que les moyens (33) d'amenée de gaz supplémentaire sont disposés circulairement sur un cercle de diamètre inférieur ou égal à deux fois le diamètre du canal central (29) et en ce que la section totale des moyens (33) d'amenée du gaz supplémentaire est comprise entre 0,75 et 2 fois la section du canal central (29).

9.  Dispositif selon la revendication 8, caractérisé en ce que les moyens (35, 36) d'amenée d'un mélange d'oxygène et de gaz combustible sont disposés sur un cercle de diamètre compris entre 3 et 4 fois le diamètre du canal central (29) et en ce que la section totale des moyens (35, 36) est comprise entre 1 et 2 fois la section du canal de coupe.

10. Dispositif selon l'une quelconque des revendications 8 et 9, caractérisé en ce que les moyens (33) à disposition annulaire d'amenée du gaz supplémentaire sont constitués par une pluralité de canaux entourant le canal central.

11. Dispositif selon l'une quelconque des revendications 8 et 9, caractérisé en ce que les moyens (33) à disposition annulaire d'amenée de gaz supplémentaire comportent une rainure annulaire (37).

12. Dispositif selon l'une quelconque des revendications 8 à 11, caractérisé en ce que les moyens (35, 36) d'amenée d'un mélange d'oxygène et de gaz combustible sont constitués d'une pluralité de canaux.

13. Dispositif d'oxycoupage selon l'une quelconque des revendications 8 à 12 comportant une buse ayant un corps (20) de forme générale cylindrique percé de canaux de passage de gaz et présentant une face (34) de sortie de gaz et une extrémité d'entrée constituée par une surface de raccordement (21) de forme conique coaxiale au corps cylindrique (20) et des moyens d'alimentation en gaz comportant un distributeur (50) ayant une surface de forme conique destinée à coopérer avec la surface de raccordement (21) de la buse pour constituer des chambres d'alimentation en gaz des canaux de la buse, et des conduites d'alimentation des chambres, la buse comportant :

    -   un canal central (29) disposé suivant l'axe du corps cylindrique (20) débouchant à l'une de ses extrémités sur la face de sortie (34) de la buse et, à son autre extrémités, sur la surface de raccordement (21) au niveau d'une chambre centrale du distributeur,
    -   une première pluralité de canaux (35) parallèles à l'axe de la buse disposés à la périphérie de la buse débouchant, sur la face de sortie (34) de la buse, dans une zone annulaire ayant pour axe l'axe de la buse par une première extrémité de sortie et ayant une seconde extrémité débouchant sur la surface de raccordement (21) dans une première chambre annulaire du distributeur délimitée sur la surface de raccordement (21) par une première rainure (23) annulaire coaxiale à la buse,

7

- une pluralité de canaux (36) inclinés par rapport à l'axe de la buse en nombre égal aux canaux de la première pluralité de canaux (35), disposés vers l'extérieur de la buse par rapport aux canaux de la première pluralité de canaux débouchant chacun dans un canal de la première pluralité de canaux par une première extrémité et sur la surface de raccordement (21) par une seconde extrémité, à l'intérieur d'une seconde chambre délimitée sur la surface de raccordement par une seconde rainure (22) annulaire coaxiale à la buse,
caractérisé en ce que la buse comporte en outre :
- une seconde pluralité de canaux (33) parallèles à l'axe de la buse débouchant à l'une de leurs extrémités sur la face de sortie (34) de la buse, dans une zone annulaire ayant pour axe l'axe de la buse et située entre l'extrémité de sortie du canal central (32) et la zone annulaire dans laquelle débouchent les extrémités de sortie des canaux (35) de la première pluralité, et à leurs autres extrémités dans une chambre du distributeur délimitée sur la surface de raccordement (21) de la buse, par une troisième rainure (24) annulaire coaxiale à la buse.

14. Dispositif selon la revendication 13, caractérisé en ce que la buse comporte une rainure annulaire (37) sur sa face de sortie (34) ayant pour axe l'axe de la buse dans laquelle débouchent les extrémités de sortie des canaux (33) de la seconde pluralité de canaux parallèles.

15. Dispositif selon l'une quelconque des revendications 13 et 14, caractérisé en ce que la paroi du canal central (29) de la buse est polie, de manière à présenter un aspect "glacé".

16. Dispositif selon l'une quelconque des revendications 13 à 15 caractérisé en ce que la buse comporte en outre, autour de son extrémité de sortie (41) une chambre annulaire (43) ayant une cloison radiale (44) et des moyens d'alimentation (45) en eau de refroidissement et d'évacuation (46) d'eau de refroidissement communiquant chacun avec l'espace interne de la chambre annulaire (43) de part et d'autre de la paroi (44)

17. Pièce métallique obtenue suivant le procédé de fabrication selon l'une quelconque des revendications 1 à 6 et notamment pièce en acier ayant deux faces opposées sensiblement parallèles et une épaisseur supérieure à 0,100 m et pouvant aller jusqu'à 2 mètres, caractérisée en ce que :

- elle est obtenue à ses cotes définitives par oxycoupage d'un produit métallique (1) sans usinage par enlèvement de copeaux, et elle présente à l'état brut de découpage :
- un rayon R caractéristique de la fusion d'arête de la pièce inférieur à 8/1000 de l'épaisseur de la pièce (12),
- un défaut de verticalité V inférieur à 8/1000 de l'épaisseur de la pièce (12),
- des stries de coupe verticales (14) uniformes et d'une profondeur inférieure à 1/1000 de l'épaisseur de la pièce (12),
- une rugosité moyenne inférieure à

$$20 \ \mu m + 20 \ \mu m \times \frac{e}{1 \ m},$$

e étant l'épaisseur de la pièce exprimée en mètres,

et la direction verticale correspondant à la direction perpendiculaire aux faces (11) opposées de la pièce suivant laquelle est mesurée l'épaisseur.

18. Pièce selon la revendication 17, caractérisée en ce que son épaisseur est supérieure à 0,300 m.

**Claims**

1. Method of making a metallic workpiece (12), more particularly a workpiece of steel, by cutting out a metal product (1) such as sheet metal or block, by oxygen cutting, in which, with the aid of a nozzle forming a heating ring, the metal product (1) is pre-heated along a cutting line corresponding to the edge of the workpiece, a jet of cutting oxygen (4) being then applied to the pre-heated cutting zone, and a peripheral sleeve (6) of a supplementary gas at low pressure being formed around the jet of cutting oxygen (4), so as to pass into the cutting zone a double coaxial jet constituted by the jet of oxygen (4) surrounded by the sleeve of supplementary gas, in such a way that the output of cutting oxygen on the one hand, and the output of supplementary gas on the other hand, are regulated separately, characterised in that the peripheral sleeve (6) is formed from a gas which is at an excess pressure with respect to atmospheric pressure of less than 1 bar.

2. Method according to claim 1, characterised in that the jet of cutting oxygen (4) is a soft, high-output jet.

**3.** Method according to claim 2, characterised in that the jet of cutting oxygen (4) is formed from gaseous oxygen at a pressure below 5 bars.

**4.** Method according to any one of claims 1 to 3, characterised in that the point of the nozzle is cooled.

**5.** Method according to any one of claims 1 to 4, characterised in that the equivalent diameter of the sleeve of gas is less than or equal to twice the diameter of the cutting jet, and in that the equivalent cross-section of the sleeve of supplementary gas is 0.75 to 2 times the cross-section of the jet of cutting oxygen.

**6.** Method according to claim 5, characterised in that the equivalent diameter of the heating ring is comprised between 3 and 4 times the diameter of the jet of cutting oxygen, and in that the equivalent cross-section of the heating ring is comprised between 1 and 2 times the cross-section of the jet of cutting oxygen.

**7.** Method according to any one of claims 1 to 6, characterised in that the workpiece is obtained at its defining sides, for its non-functional portions, by oxygen cutting without subsequent machining.

**8.** Oxygen-cutting apparatus for putting into effect the method according to any one of the preceding claims, of the type comprising a nozzle with a central feed duct (29) for a jet of oxygen, feed means disposed (33) in an annular configuration for the supplementary gas, and surrounding the central duct (29), and feed means (35, 36) for a mixture of oxygen and combustible gas surrounding the annularly disposed feed means (33) for the supplementary gas, characterised in that the feed means (33) for the supplementary gas are disposed in a circular configuration on a circle with a diameter less than or equal to twice the diameter of the central duct (29), and in that the total cross-section or the feed means (33) for the supplementary gas is comprised between 0.75 and 2 times the cross-section of the central duct (29).

**9.** Apparatus according to claim 8, characterised in that the feed means (35, 36) for a mixture of oxygen and of combustible gas are disposed on a circle with a diameter comprised between 3 and 4 times the diameter of the central duct (29), and in that the total cross-section of said means (35, 36) is comprised between 1 and 2 times the cross-section of the cutting duct.

**10.** Apparatus according to any one of claims 8 and 9, characterised in that the annularly-disposed feed means (33) for the supplementary gas are constituted by a plurality of ducts surrounding the central duct.

**11.** Apparatus according to any one of claims 8 and 9, characterised in that the annularly-disposed feed means (33) for the supplementary gas comprise an annular groove (37).

**12.** Apparatus according to any one of claims 8 to 11, characterised in that the feed means (35, 36) for a mixture of oxygen and of combustible gas are constituted by a plurality of ducts.

**13.** Oxygen-cutting apparatus according to any one of claims 8 to 12, comprising a nozzle with a body (20) of generally cylindrical form, traversed by gas-conducting ducts, and having a gas outlet face (34) and an inlet end constituted by a connector surface (21) of conical shape coaxial with the cylindrical body (20) , and gas feed means comprising a distributor (50) having a surface of conical shape intended to cooperate with the connector surface (21) of the nozzle in order to constitute gas feed chambers for the ducts of the nozzle, and food conduits for the chambers, the nozzle constituting:

- a central duct (29) disposed along the axis of the cylindrical body (20), opening at one of its ends on to the outlet surface (34) of the nozzle and, at its other end, on to the connector surface (21) level with a central chamber of the distributor;
- a first plurality of ducts (35) parallel with the axis of the nozzle, disposed on the periphery of the nozzle opening, on the output face (34) of the nozzle, into an annular zone which has as its axis the axis of the nozzle by a first end, and having a second end opening on to the connector surface (21) into a first annular chamber of the distributor defined on the connector surface (21) by a first annular groove (23) coaxial with the nozzle,
- a plurality of ducts (36) inclined with respect to the nozzle, and equal in number to the ducts of the first plurality of ducts (35), disposed towards the exterior of the nozzle with respect to the ducts of the first plurality of ducts, each opening into a duct of the first plurality of ducts by a first end and on to the connector surface (21) by a second end, inside a second chamber defined on the connector surface by a second annular groove (22) coaxial with the nozzle,

characterised in that , in addition, the nozzle comprises:

- a second plurality-of ducts (33) parallel with the axis of the nozzle, opening at one of their ends on to the outlet surface (34) of the nozzle, in an annular zone which has as its axis the axis at the nozzle, and situated between the outlet end of the central duct (32) and the annular zone into which the outlet ends of the ducts (35) of the first plurality open, and at their other ends into a chamber of the distributor, defined an the connector surface (21) of the nozzle by a third annular groove(24) coaxial with the nozzle.

14. Apparatus according to claim 13, characterised in that the nozzle comprises an annular groove (37) on its outlet surface (34) and having as its axis the axis of the nozzle, into which the outlet ends of the ducts (33) of the second plurality of parallel ducts open.

15. Apparatus according to any one of claims 13 and 14, characterised in that the wall of the central duct (29) of the nozzle is polished, so as to have a glossy appearance.

16. Apparatus according to any one of claims 13 to 15, characterised in that the nozzle in addition comprises, around its outlet end (41), an annular chamber (43) having a radial partition (44) and feed (45) and return (46) means for cooling water, each communicating with an internal space of the annular chamber (43) on either side of the wall (44).

17. Metallic workpiece (12), particularly a workpiece of steel, obtained by the method according to any one of claims 1 to 16, having two opposite, substantially parallel faces, and a thickness greater than 0.100 m, and possibly extending to 2 metres, characterised in that :

- it is obtained at its defining sides by oxygen-cutting of a metallic product (1) without machining by chip removal, and in the raw cut state it has:
- a radius R characteristic of the edge fusion of the workpiece of less than 8/1000 of the thickness of the workpiece (12);
- a vertical error C of less than 8/1000 of the thickness of the workpiece (12);
- vertical cutting marks (14) which are uniform and of a depth less than 1/1000 of the thickness of the workpiece (12);
- an average roughness of less than 20 $\mu$m + 20 $\mu$m x e/1m , e being the thickness of the workpiece expressed in metres,

and the vertical direction corresponding to the direction perpendicular to the opposed faces (11) of the workpiece, and in accordance with which the thickness is measured.

18. Workpiece according to claim 17, characterised in that its thickness is greater than 0.300 m.

## Patentansprüche

1. Verfahren zur Herstellung eines metallischen Werkstücks (12) und insbesondere eines Werkstücks aus Stahl durch Schneiden eines metallischen Produktes (1), wie beispielsweise eines Bleches oder eines Blocks, durch Sauerstoffbrennschneiden, bei dem mit Hilfe einer Düse, die eine Heizkrone bildet, das metallische Produkt (1) entlang eines Schnittbereiches, der dem Rand des Werkstückes entspricht, vorerhitzt wird, ein Schneidesauerstoffstrahl (4) auf den vorerhitzten Schnittbereich gerichtet wird und um den Schneidesauerstoffstrahl (4) eine Peripheriehülse (6) aus Zusatzgas mit geringem Druck gebildet wird, sodaß in den Schnittbereich ein doppelter Koaxialstrahl gesandt wird, der von dem Sauerstoffstrahl (4) gebildet wird, der von der Hülse aus Zusatzgas dermaßen umgeben ist, daß der Durchfluß von Schneidesauerstoff einerseits und der Durchfluß des Zusatzgases andererseits separat geregelt werden, dadurch gekennzeichnet, daß die Peripheriehülse (6) aus einem Gas gebildet wird, das einen Überdruck in bezug auf den Luftdruck von weniger als 1 bar aufweist.

2. Verfahren nach Anspruch 1, dadurch gekennzeichnet, daß der Schneidesauerstoffstrahl (4) ein weicher Strahl mit großer Durchflußrate ist.

3. Verfahren nach Anspruch 2, dadurch gekennzeichnet, daß der Schneidesauerstoffstrahl (4) aus gasförmigem Sauerstoff mit einem Druck von weniger als 5 bar gebildet wird.

4. Verfahren nach einem der Ansprüche 1 bis 3, dadurch gekennzeichnet, daß das Düsenmundstück abgekühlt ist.

5. Verfahren nach einem der Ansprüche 1 bis 4, dadurch gekennzeichnet, daß der Äquivalentdurchmesser der Hülse aus Zusatzgas kleiner oder gleich zweimal den Durchmesser des Schneidestrahls ist, und daß der Äquivalentquerschnitt der, Hülse aus Zusatzgas 0,75 bis 2 mal dem Querschnitt des Schneidesauerstoffstrahls ist.

6. Verfahren nach Anspruch 5, dadurch gekennzeichnet, daß der Äquivalentdurchmesser der Heizkrone zwischen 3 und 4 mal dem Durchmesser des Schneidesauerstoffstrahls ist, und daß der Äquivalentquerschnitt der Heizkrone zwischen 1 und 2 mal dem Querschnitt des Schneidesauerstoffqerschnitts ist.

7. Verfahren nach einem der Ansprüche 1 bis 6, dadurch gekennzeichnet, daß das Werkstück auf seine endgültigen Maße für seine Nichtfunktionsteile durch Sauerstoffbrennschneiden ohne weitere Bearbeitung hergestellt wird.

8. Sauerstoffbrennschneide-Anlage für den Einsatz des Verfahrens nach einem der vorhergehenden Ansprüche, bestehend aus einer Düse mit einem Mittelkanal (29) für die Zuleitung einer Sauerstoffader, ringförmig angeordneten Mitteln (33) für die Zuleitung von Zusatzgas, die den Mittelkanal (29) umgeben, und Mitteln (35, 36) für die Zuleitung eines Gemisches aus Sauerstoff und Brenngas, die die ringförmig angeordneten Mittel (33) für die Zuleitung von Zusatzgas umgeben, dadurch gekennzeichnet, daß die Mittel (33) für die Zuleitung von Zusatzgas kreisförmig auf einem Kreis angeordnet sind, dessen Durchmesser kleiner oder gleich zweimal dem Durchmesser des Mittelkanals (29) ist, und daß dar Gesamtquerschnitt der Mittel (33) für die Zuleitung des Zusatzgases zwischen 0,75 und 2 mal dem Querschnitt des Mittelkanals (29) liegt.

9. Anlage nach Anspruch 8, dadurch gekennzeichnet, daß die Mittel (35, 36) für die Zuleitung eines Gemisches aus Sauerstoff und Brenngas auf einem Kreis angeordnet sind, dessen Durchmesser zwischen 3 und 4 mal dem Durchmesser des Mittelkanals (29) liegt, und daß der Gesamtquerschnitt der Mittel (35, 36) zwischen 1 und 2 mal dem Querschnitt des Schneidekanals beträgt.

10. Anlage nach einem der Ansprüche 8 und 9, dadurch gekennzeichnet, daß die ringförmig angeordneten Mittel (33) für die Zuleitung des Zusatzgases von einer Vielzahl von Kanälen gebildet werden, die den Mittelkanal umgeben.

11. Anlage nach einem der Ansprüche 8 und 9, dadurch gekennzeichnet, daß die ringförmig angeordneten Mittel (33) für die Zuleitung des Zusatzgases eine Ringnut (37) umfassen.

12. Anlage nach einem der Ansprüche 8 bis 11, dadurch gekennzeichnet, daß die Mittel (35, 36) für die Zuleitung eines Gemisches aus Sauerstoff und Brenngas von einer Vielzahl von Kanälen gebildet werden.

13. Sauerstoffbrennschneide-Anlage nach einem der Ansprüche 8 bis 12, bestehend aus einer Düse mit einem Körper (20) allgemeiner zylindrischer Form mit Gasdurchflußkanälen und einer Gasaustrittsseite (34) und einem Eintrittsende, das von einer Fläche (21) konischer koaxialer Form für den Anschluß an den zylindrischen Körper (20) gebildet wird, und Mitteln für die Gasversorgung, bestehend aus einem Verteiler (50) mit einer Fläche konischer Form, die mit der Aschlußfläche (21) der Düse zusammenwirken soll, um Kammern für die Versorgung der Kanäle der Düse mit Gas zu bilden, und Leitungen für die Versorgung der Kammern, wobei die Düse besteht aus:

- einem Mittelkanal (29), der entlang der Achse des zylindrischen Körpers (20) angeordnet ist, der an einem seiner Enden in die Ausgangsseite (34) der Düse und an seinem anderen Ende in die Anschlußfläche (21) im Bereich einer Mittelkammer des Verteilers mündet,
- einer ersten Vielzahl von Kanälen (35), die zur Achse der Düse parallel und an der Peripherie der Düse angeordnet sind und auf der Ausgangsseite (34) der Düse durch ein erstes Ausgangsende in einen ersten ringförmigen Bereich münden, dessen Achse die Achse der Düse durch ein erstes Ausgangsende ist, und der ein zweites Ende aufweist, das in die Anschlußfläche (21) in eine erste ringförmige Kammer des Verteilers mündet, die auf der Anschlußfläche (21) von einer ersten Ringnut (23) begrenzt wird, die zur Düse koaxial ist,
- einer Vielzahl von Kanälen (36), die zur Achse der Düse geneigt und in gleicher Anzahl wie die Kanäle der ersten Vielzahl von Kanälen (35) vorhanden sind und die zur Außenseite der Düse in bezug auf die Kanäle der ersten Vielzahl von Kanälen geneigt sind und die jeweils in einen Kanal der ersten Vielzahl von Kanälen durch ein erstes Ende und in die Anschlußfläche (21) durch ein zweites Ende münden, innerhalb einer zweiten Kammer, die auf der Anschlußfläche durch eine zweite ringförmige Nut (22), die zur Düse koaxial ist, begrenzt wird, dadurch gekennzeichnet, daß die Düse ferner besteht aus:
- einer zweiten Vielzahl von Kanälen (33), die zur Achse der Düse parallel sind und an einem ihrer Enden in die Ausgangsseite (34) der Düse in einen ringförmigen Bereich münden, dessen Achse die Achse der Düse ist und der sich zwischen dem Ausgangsende des Mittelkanals (32) und dem ringförmigen Bereich befindet, in den die Ausgangsenden der Kanäle (35) der ersten Vielzahl münden, und die an ihren anderen Enden in eine Kammer des Verteilers münden, die auf der Anschlußfläche (21) der Düse von einer dritten ringförmigen Nut (24) begrenzt wird, die zur Düse koaxial ist.

14. Anlage nach Anspruch 13, dadurch gekennzeichnet, daß die Düse eine Ringnut (37) auf ihrer Ausgangsseite (34) umfaßt, deren Achse die Achse der Düse ist, in die die Ausgangsenden der Kanäle (33) der zweiten Vielzahl von parallelen Kanälen münden.

15. Anlage nach einem der Ansprüche 13 und 14, dadurch gekennzeichnet, daß die Wand des Mittelkanals (29) der Düse poliert ist, sodaß sie ein "vereistes" Aussehen aufweist.

16. Anlage nach einem der Ansprüche 13 bis 15, dadurch gekennzeichnet, daß die Düse ferner um ihr Ausgangsende (41) herum eine ringförmige Kammer (43), die eine radiale Wand (44) aufweist, und Mittel zur Versorgung (45) mit Kühlwasser und zur Beseitigung (46) des Kühlwassers umfaßt, die jeweils mit dem Innenraum der ringförmigen Kammer (43) auf beiden Seiten der Wand (44) in Verbindung stehen.

17. Metallisches Werkstück, das nach dem Herstellungsverfahren nach einem der Ansprüche 1 bis 6 hergestellt wird, und insbesondere Werkstück aus Stahl mit zwei gegenüberliegenden im wesentlichen parallelen Seiten mit einer Dicke von mehr als 0,100 m, die bis zu 2 Metern gehen kann, dadurch gekennzeichnet, daß:

  - es auf seine endgültigen Maße durch Sauerstoffbrennschneiden eines metallischen Produktes (1) ohne weitere spanabhebende Bearbeitung hergestellt wird, und daß es im Schneiderohzustand folgendes aufweist:
  - einen Radius R, der für die Kantenschmelzung des Werkstückes charakteristisch ist und kleiner als 8/1000 von der Dicke des Werkstücks (12) ist,
  - einen Vertikalfehler V, der kleiner als 8/1000 von der Dicke des Werkstücks (12) ist,
  - gleichartige vertikale Schnittrillen (14) mit einer Tiefe von weniger als 1/1000 von der Dicke des Werkstückes (12),
  - eine durchschnittliche Rauhigkeit, die kleiner als

$$20 \; \mu m + 20 \; \mu m \times \frac{e}{1 \, m}$$

ist, wobei e die Dicke des Werkstücks, ausgedrückt in Metern, ist und die Vertikalrichtung der Richtung entspricht, die auf die gegenüberliegenden Seiten (11) des Werkstückes senkrecht steht, und nach der die Dicke gemessen wird.

18. Werkstück nach Anspruch 17, dadurch gekennzeichnet, daß seine Dicke größer als 0,300 m ist.

FIG.1

FIG.4

FIG.5

FIG.2

FIG.3

FIG.6

FIG.7